# EUROPÄISCHE PATENTSCHRIFT

(11) **EP 3 111 115 B1**
(45) Veröffentlichungstag und Bekanntmachung des Hinweises auf die Patenterteilung: **08.01.2020**
(21) Anmeldenummer: 15705821.5
(22) Anmeldetag: 20.02.2015
(51) Int. Cl.: F16J 15/06, F16J 15/10, F16J 15/12

(54) **VERFAHREN ZUM HERSTELLEN EINES FUNKTIONSELEMENTS FÜR FLACHDICHTUNGEN SOWIE FUNKTIONSELEMENT FÜR FLACHDICHTUNGEN**
METHOD FOR PRODUCING A FUNCTIONAL ELEMENT FOR FLAT SEALS, AND FUNCTIONAL ELEMENT FOR FLAT SEALS
PROCÉDÉ DE FABRICATION D'UN ÉLÉMENT FONCTIONNEL POUR JOINTS PLATS AINSI QU'ÉLÉMENT FONCTIONNEL POUR JOINTS PLATS

(30) Priorität: 25.02.2014 DE 102014102462; 24.04.2014 DE 102014105806
(43) Veröffentlichungstag der Anmeldung: 04.01.2017
(73) Patentinhaber: ElringKlinger AG, 72581 Dettingen (DE)
(72) Erfinder: SCHÖLLHAMMER, Jochen, 72581 Dettingen (DE); HASSLER, Florian, 72581 Dettingen (DE)
(74) Vertreter: Hoeger, Stellrecht & Partner Patentanwälte mbB
(86) Internationale Anmeldenummer: PCT/EP2015/053593
(87) Internationale Veröffentlichungsnummer: WO 2015/128251

(56) Entgegenhaltungen:
- EP-A1- 1 610 042
- WO-A1-2008/135133
- WO-A2-2007/126978
- DE-A1-102010 030 072
- DE-U1-202010 006 768
- DE-U1-202011 004 993
- US-A- 2 222 058

## Beschreibung

Die Erfindung betrifft ein Verfahren zum Herstellen eines Funktionselements insbesondere für Flachdichtungen, bei welchem eine Funktionsmateriallage mit einem Siebbereich versehen wird, in welchem zwischen Fäden eines Gewebes oder Geflechts Durchlassöffnungen zum Durchströmen für ein Fluid freiliegend sind.

Ein derartiges Verfahren ist beispielsweise aus der DE 20 2011 004 993 U1 bekannt.

Bei dieser bekannten Lösung ist zur Herstellung einer Abdichtung um die Siebbereiche vorgesehen, die Fäden selbst im Bereich der Kreuzungsstellen der Fäden zu deformieren.

Eine derartige Deformation der Fäden verbessert zwar die Möglichkeit der Abdichtung um den Siebbereich, schafft jedoch keine zuverlässige dauerhafte Querschnittsdichtheit um den Siebbereich herum, da im Bereich der Kreuzungsstellen der Fäden immer noch Spalten verbleiben, die die Dichtheit negativ beeinflussen.

WO 2007/126978 A2 offenbart ein Verfahren zum Herstellen eines Funktionselements sowie ein Funktionselement gemäß den Oberbegriffen der Ansprüche 1 und 8.

Der Erfindung liegt daher die Aufgabe zugrunde, ein Verfahren der gattungsgemäßen Art derart zu verbessern, dass eine möglichst gute Abdichtung um die Siebbereiche herum möglich ist.

Diese Aufgabe wird durch ein Verfahren gemäß dem Anspruch 1 gelöst.

Erst durch Verschließen der Durchlassöffnungen ist eine zuverlässige und dauerhafte Querschnittsdichtheit in dem Abdichtbereich um den jeweiligen Siebbereich herum gegeben.

Ein weiterer Vorteil der erfindungsgemäßen Lösung ist, dass das Füllmaterial auch eine Stabilisierung des Gewebes oder Geflechts, ähnlich wie bei einem Faserverbundwerkstoff, bewirkt, und zwar eine Stabilisierung der Lage der Fäden relativ zueinander, die somit den Fadenverlauf fixiert und eine formstabile Struktur erzeugt, die insbesondere um den mindestens einen Siebbereich herum eine Formstabilität der Funktionsmateriallage bewirkt. Außerdem wird bei entsprechend großer Ausdehnung des Abdichtbereichs ein stabiles flächenhaftes Gebilde geschaffen.

Insbesondere lassen sich durch eine derartige formstabile Struktur auch Randbereiche der Funktionsmateriallage stabil ausbilden.

Damit wird auch die Positioniergenauigkeit des Siebbereichs und des Abdichtbereichs beim Einbau eines derartigen Funktionselements verbessert sowie auch das Langzeitpositionierverhalten.

Ferner schafft die erfindungsgemäße Lösung die Möglichkeit, nach wie vor das Gewebe oder Geflecht als Basis für die Ausbildung des Abdichtbereichs heranzuziehen, so dass insbesondere der Übergang vom Siebbereich zu dem Abdichtbereich in einfacher Weise herstellbar ist, da ausgehend von dem Gewebe oder Geflecht als Ausgangsmaterial lediglich im Abdichtbereich die Durchlassöffnungen mit dem Füllmaterial verschlossen werden müssen, während der Siebbereich im einfachsten Fall durch das Gewebe oder Geflecht selbst gebildet werden kann, ohne dass ein Einwirken auf das Gewebe oder Geflecht oder eine Behandlung des Gewebes oder Geflechts im Siebbereich erforderlich sind.

Vielmehr kann das Gewebe oder Geflecht so ausgewählt werden, dass es die erforderlichen Eigenschaften für die Bildung des Siebbereichs hat und lediglich dann ein Verschließen der Durchlassöffnungen in dem Abdichtbereich erfolgt. Der Abdichtbereich erstreckt sich dabei nicht ausschließlich um den jeweiligen Siebbereich herum, sondern es ist beispielsweise auch denkbar, einen derartigen Abdichtbereich zum Abdichten um einen Durchbruch durch die Funktionsmateriallage heranzuziehen, wobei der Durchbruch entweder für Verbindungselemente oder für Fluiddurchgänge ohne Sieb oder Filterfunktion eingesetzt werden kann.

In einem Fall, in welchem die Fäden ausreichend Material aufweisen, ist es beispielsweise bei einer Lösung denkbar, dass im Abdichtbereich die Fäden erweicht werden und das erweichte Material der Fäden als Füllmaterial dient, mit welchem die Durchlassöffnungen verschlossen werden.

Das heißt, dass in diesem Fall die Fäden zumindest einen Teil des Füllmaterials zum Verschließen der Durchlassöffnungen zur Verfügung stellen.

Um ausreichend Füllmaterial, insbesondere auch bei dünnen Fäden, zu haben, ist vorzugsweise vorgesehen, dass auf das Gewebe oder Geflecht Füllmaterial aufgetragen und das erweichte Füllmaterial verpresst wird, um die Durchlassöffnungen zu verschließen.

In diesem Fall wäre es beispielsweise denkbar, das Füllmaterial bereits im erweichten Zustand aufzutragen und dann nur noch das erweichte Füllmaterial zu verpressen.

Das Füllmaterial lässt sich beispielsweise im erweichten, das heißt beispielsweise nicht vernetzten oder teilvernetzen, Zustand herstellen und in diesem Zustand auf das Gewebe oder Geflecht auftragen, dann verpressen und anschließend erfolgt ein Übergang in den nicht mehr erweichten Zustand.

In diesem nicht mehr erweichten Zustand ist das Füllmaterial dann immer noch elastisch deformierbar.

Das die Durchlassöffnungen verschließende Füllmaterial wird als Schicht auf das Gewebe oder Geflecht aufgetragen oder aufgelegt und nach dem Erweichen in das Gewebe oder Geflecht eingepresst.

Das heißt, dass das Füllmaterial in einem noch nicht erweichten Zustand auf das Gewebe oder Geflecht aufgetragen oder aufgelegt wird und dann erst das Erweichen und Verpressen des Füllmaterials erfolgt.

Beispielsweise wäre es denkbar, das Füllmaterial als feste Schicht oder Folie auf das Gewebe oder Geflecht im Abdichtbereich aufzulegen und dann zu erweichen, um dieses dann zum Verschließen der Durchlassöffnungen zu verpressen.

Durch das Verpressen des erweichten Füllmaterials werden die Durchlassöffnungen des Gewebes oder Geflechts verschlossen und auch die Fäden umschließende Raumbereiche des Gewebes oder Geflechts ausgefüllt.

Das heißt, dass durch das Füllmaterial nicht nur die Durchlassöffnungen verschlossen werden, sondern die sich an die Fäden insbesondere angrenzend an Kreuzungsstellen anschließenden Raumbereiche ausgefüllt werden.

Damit lassen sich weitestgehend Spalte oder Hohlräume vermeiden, die die Querschnittsdichtigkeit im Abdichtbereich beeinträchtigen könnten. Besonders günstig ist es für ein dauerhaftes Verschließen der Durchlassöffnungen, wenn das Füllmaterial so verpresst wird, dass dieses die Durchlassöffnungen durchsetzt.

Um eine möglichst optimale Abdichtung des Funktionselements im Abdichtbereich zu ermöglichen, ist vorzugsweise vorgesehen, dass durch das Verpressen des erweichten Füllmaterials beiderseits des Gewebes oder Geflechts eine zur Abdichtung gegen eine Anlagefläche geeignete Dichtoberfläche gebildet wird.

Eine derartige Dichtoberfläche ist beispielsweise so ausgebildet, dass sie eine Oberflächenrauigkeit aufweist, die kleiner ist als eine Fadendicke, noch besser kleiner als die Hälfte einer Fadendicke und vorzugsweise kleiner als ein Zehntel einer Fadendicke.

Insbesondere ist es vorteilhaft, wenn die Oberflächenrauigkeit weniger als 20 µm, noch besser weniger als 10 µm, beträgt.

Damit stehen ausreichend präzise Dichtoberflächen zur Verfügung, um ein Abdichten des Funktionselements mit einfachen Mitteln dauerhaft realisieren zu können.

Insbesondere ist dabei vorgesehen, dass die jeweilige Dichtoberfläche zur Abdichtung gegen eine Anlagefläche einer höhenunelastischen Baugruppe ausgebildet ist.

Das heißt, dass die Oberflächenqualität der Dichtoberfläche so gut ist, dass die geringe Elastizität des Abdichtbereichs ausreichend ist, um gegenüber einer Anlagefläche einer höhenunelastischen Baugruppe eine ausreichend gute Abdichtung zu erreichen.

Hinsichtlich der Auswahl des Füllmaterials wurde bislang lediglich festgelegt, dass dieses erweichbar und verpresst in das Gewebe oder Geflecht einpressbar sein soll.

Ein derartiges Füllmaterial könnte beispielsweise ein Füllmaterial sein, das sich durch Lösungsmittel erweichen und dann verpressen lässt.

Eine besonders günstige Lösung sieht jedoch vor, dass als Füllmaterial ein Thermoplastmaterial verwendet wird, welches durch Aufheizen in einfacher Art und Weise erweichbar oder verflüssigbar ist.

Hinsichtlich der Ausbildung der Fäden selbst wurden bislang keine näheren Angaben gemacht.

So sieht eine vorteilhafte Lösung vor, dass die Fäden eine Fadendicke von maximal 300 µm aufweisen, besser ist es, wenn die Fäden eine Fadendicke von maximal 200 µm, noch besser eine Fadendicke von maximal 100 µm, und besonders bevorzugt eine Fadendicke von maximal 50 µm, aufweisen, um ein sehr feines Gewebe oder Geflecht einsetzen zu können.

Die Fäden können dabei beispielsweise Metallfäden sein, insbesondere wäre es denkbar, als Fäden Edelstahlfäden einzusetzen.

Eine andere vorteilhafte Lösung sieht jedoch vor, dass das Gewebe oder Geflecht aus Kunststofffäden gebildet wird.

Derartige Kunststofffäden können aus unterschiedlichsten Materialien ausgebildet sein.

Eine besonders zweckmäßige Lösung sieht vor, dass das Gewebe oder Geflecht Fäden aus Thermoplastmaterial aufweist, wobei das Thermoplastmaterial der Fäden als Füllmaterial zum Verschließen der Durchlassöffnungen thermisch erweicht und verpresst wird.

In diesem Fall kann somit das Füllmaterial teilweise durch den erweichten Anteil des Materials der Fäden zum Verschließen der Durchlassöffnungen eingesetzt werden.

Bei einer anderen Lösung, bei welcher insbesondere das Gewebe oder Geflecht eine stabile Basis für den Abdichtbereich bildet, ist vorzugsweise vorgesehen, dass die Funktionsmateriallage durch ein Gewebe oder Geflecht aus Fäden gebildet wird, deren Schmelzpunkt soweit über dem Schmelzpunkt des auf dieses aufgetragenen Thermoplastmaterials liegt, das bei einem Erweichen des aufgetragenen Thermoplastmaterials kein Erweichen der Fäden erfolgt.

In diesem Fall bleiben somit die Fäden auch beim Erweichen des Füllmaterials undeformiert und behalten ihre mechanischen Eigenschaften bei, um somit eine stabile Basis für den Abdichtbereich und den Übergang zwischen dem Abdichtbereich und dem Siebbereich zu haben, so dass keinerlei Fadenbrüche oder andere Brucherscheinungen am Übergang vom Siebbereich zum Abdichtbereich auftreten.

Hinsichtlich der weiteren Ausbildung des Funktionselements wurden bislang keine näheren Angaben gemacht.

Prinzipiell könnte ein derartiges Funktionselement mit den bislang definierten Merkmalen als Flachdichtung eingesetzt werden.

Besonders vorteilhaft ist es jedoch für den Einsatz eines erfindungsgemäßen Funktionselements als Flachdichtung, wenn auf mindestens einer der Dichtoberflächen ein Abdichtelement vorgesehen wird.

Ein derartiges Abdichtelement dient dazu, als insbesondere höhenelastisch wirkendes Element eine Abdichtung zu einer Anlagefläche einer Baugruppe herzustellen, wobei ein derartiges höhenelastisches Abdichtelement insbesondere dazu dient, einen Spalt zwischen der Dichtoberfläche und der Anlagefläche der Baugruppe, insbesondere dann, wenn dieser über seine Spaltausdehnung variiert, zu überbrücken und somit zu verschließen.

Aus diesem Grund ist beispielsweise vorgesehen, dass mindestens einer der Abdichtbereiche mit einem Abdichtelement aus Elastomermaterial vorgesehen wird.

Ein derartiges Elastomermaterial schafft in üblicher Weise die Möglichkeit, den Spalt zwischen der Dichtoberfläche und einer Anlagefläche der Baugruppe elastisch zu überbrücken.

Eine derartige Elastomerschicht kann beispielsweise nachträglich nach Ausbildung der Dichtoberflächen aufgetragen werden.

Eine hinsichtlich der Herstellung besonders vorteilhafte Lösung sieht vor, dass das Abdichtelement aus Elastomermaterial zusammen mit einer das Füllmaterial aufweisenden Folie auf das Gewebe oder Geflecht aufgelegt wird, wobei insbesondere in diesem Fall vorgesehen ist, dass beim Erweichen der Folie die Elastomerschicht keine Formveränderung erfährt, so dass die Elastomerschicht dann, wenn das Füllmaterial in das Gewebe oder Geflecht eingepresst ist, unverändert vorhanden ist.

Vorzugsweise ist die Elastomerschicht aus einem Duromer gebildet und somit thermisch nicht erweichbar.

Eine andere vorteilhafte Lösung sieht vor, dass auf der mindestens einen Dichtoberfläche als Abdichtelement mindestens eine Lage aus einem metallischen Flachmaterial vorgesehen wird.

Vorzugsweise ist dabei vorgesehen, dass die mindestens eine Lage aus metallischem Flachmaterial mit mindestens einem Dichtelement versehen wird, wobei ein derartiges Dichtelement beispielsweise als Elastomerauflage oder Sicke ausgebildet sein kann.

Darüber hinaus betrifft die Erfindung ein Funktionselement insbesondere für Flachdichtungen umfassend eine Funktionsmateriallage mit einem Siebbereich, in welchem zwischen Fäden eines Gewebes oder Geflechts Durchlassöffnungen zum Durchströmen für ein Fluid freiliegend angeordnet sind, wobei erfindungsgemäß in einem querschnittsdicht ausgebildeten Abdichtbereich die Durchlassöffnungen des Gewebes oder Geflechts durch ein Füllmaterial ausgefüllt und somit verschlossen sind.

Der Vorteil der erfindungsgemäßen Lösung ist darin zu sehen, dass somit in einfacher Weise eine querschnittsdichte Ausbildung des Abdichtbereichs realisiert werden kann.

Außerdem bewirkt bei einem derartigen Funktionselement das Füllmaterial eine Stabilisierung des Gewebes, wie bereits eingangs im Zusammenhang mit dem erfindungsgemäßen Verfahren beschrieben.

Beispielsweise ist es dabei denkbar, dass das Füllmaterial Material der Fäden umfasst, wobei das Füllmaterial zum Teil durch Material der Fäden gebildet ist.

Weiterhin ist vorzugsweise vorgesehen, dass in das Gewebe oder Geflecht ein das Gewebe oder Geflecht ergänzendes Füllmaterial eingepresst ist.

Dabei kann das das Gewebe oder Geflecht ergänzende Füllmaterial ausschließlich dazu dienen, die Durchlassöffnungen aufzufüllen, so dass die Fäden des Gewebes oder Geflechts unverändert ihre Form beibehalten oder es kann zumindest teilweise auch Material der Fäden des Gewebes oder Geflechts als Füllmaterial herangezogen sein.

Das die Durchlassöffnungen verschließende Füllmaterial ist durch eine in das Gewebe oder Geflecht eingepresste Schicht aus ergänzendem Füllmaterial gebildet.

Das verpresste Füllmaterial verschließt die Durchlassöffnungen des Gewebes oder Geflechts und füllt sich an die Fäden anschließende Raumbereiche des Gewebes oder Geflechts aus.

Damit werden nicht nur die Durchlassöffnungen verschlossen, sondern es werden auch sich an die Fäden anschließende Raumbereiche, insbesondere im Anschluss an Kreuzungsstellen der Fäden, durch das Füllmaterial aufgefüllt. Besonders günstig ist es, wenn das Füllmaterial die Durchlassöffnungen durchsetzt, um somit eine optimale Querschnittsdichtigkeit im Bereich der Durchlassöffnungen zu erreichen.

Um das erfindungsgemäße Funktionselement optimal gegen Anlageflächen von weiteren Baugruppen abdichten zu können, ist vorzugsweise vorgesehen, dass das eingepresste Füllmaterial beidseitig des Gewebes oder Geflechts eine zur Abdichtung gegen eine Anlagefläche geeignete Dichtoberfläche bildet.

Eine derartige Dichtoberfläche ist vorzugsweise eine Dichtoberfläche mit einer geringen Oberflächenrauigkeit von weniger als 20 µm, noch besser weniger als 10 µm.

Insbesondere ist es vorteilhaft, wenn die jeweilige Dichtoberfläche zur Abdichtung gegen eine Anlagefläche einer höhenunelastischen Baugruppe ausgebildet ist, das heißt eine ausreichend gute Oberflächenqualität aufweist, um eine optimale Abdichtung zu einer derartigen Anlagefläche zu gewährleisten.

Hinsichtlich der Ausbildung des Füllmaterials wurden bislang keine näheren Angaben gemacht.

So wäre es beispielsweise denkbar, das Füllmaterial als durch ein Lösungsmittel erweichbares Material auszubilden.

Eine andere vorteilhafte Lösung sieht vor, dass das Füllmaterial ein Thermoplastmaterial ist.

Ferner wurden hinsichtlich der Ausbildung des Gewebes oder Geflechts keine näheren Angaben gemacht.

Besonders günstig ist es, wenn die Fäden des Gewebes oder Geflechts eine Fadenstärke von maximal 300 µm, besser maximal 200 µm, noch besser maximal 100 µm und in einem besonderen Fall maximal 50 µm, aufweisen.

Prinzipiell könnte das Gewebe oder Geflecht aus Metallfäden oder auch Fäden aus anderen Materialien, wie beispielsweise Keramik, gebildet sein.

Eine besonders günstige Lösung sieht jedoch vor, dass das Gewebe oder Geflecht aus Kunststofffäden gebildet ist.

Im Fall von Kunststofffäden ist vorzugsweise vorgesehen, dass das Gewebe oder Geflecht Fäden aus Thermoplastmaterial aufweist, wobei das Thermoplastmaterial der Fäden zum Teil als Füllmaterial zum Verschließen der Durchlassöffnungen verpresst ist.

Das heißt, dass in diesem Fall das Material der Fäden des Gewebes oder Geflechts zum Teil dazu herangezogen werden kann, als Füllmaterial die Durchlassöffnungen zu verschließen.

Eine weitere vorteilhafte Lösung sieht vor, dass die Funktionsmateriallage durch ein Gewebe oder Geflecht aus Fäden gebildet ist, deren Schmelzpunkt soweit über dem Schmelzpunkt des auf dieses aufgetragenen Thermoplastmaterials liegt, dass das aufgetragene Thermoplastmaterial in den Durchlassöffnungen der formunveränderten Fäden angeordnet ist, das heißt, dass die Fäden in diesem Fall keine Formveränderung erfahren und deren Material nicht als Füllmaterial herangezogen wird, sondern ausschließlich das ergänzende Füllmaterial als Thermoplastmaterial dazu dient, die Durchlassöffnungen zu verschließen.

Hinsichtlich der weiteren Ausbildung des erfindungsgemäßen Funktionselements wurden bislang keine näheren Angaben gemacht.

So sieht eine vorteilhafte Lösung vor, das Funktionselement selbst ohne weitere zusätzliche Elemente als Flachdichtung einzusetzen, wobei die Dichtoberflächen unmittelbar an Anlageflächen der abzudichtenden Baugruppe angelegt werden.

Eine andere vorteilhafte Lösung sieht vor, dass auf mindestens einer der Dichtoberflächen ein Abdichtelement angeordnet ist, welches dazu dient, einen Spalt zwischen der Dichtoberfläche und der Anlagefläche der Baugruppe zu verschließen.

In diesem Fall ist vorzugsweise das Abdichtelement als höhenelastisches Abdichtelement ausgebildet.

Eine Lösung für ein derartiges Abdichtelement sieht vor, dass auf mindestens einer der Dichtoberflächen ein Abdichtelement aus Elastomermaterial angeordnet ist.

Dabei kann das Elastomermaterial beispielsweise nach Herstellung der Dichtoberflächen auf diese aufgelegt oder aufgetragen werden.

Eine besonders günstige Lösung sieht vor, dass das Elastomermaterial aus einem thermisch nicht erweichbaren Material, beispielsweise einem Duromer, ausgebildet ist, so dass das Abdichtelement nach einem thermischen Erweichen des Füllmaterials formunverändert ist.

In diesem Fall besteht beispielsweise die Möglichkeit, dass das Füllmaterial und das Abdichtelement gleichzeitig auf das Gewebe oder Geflecht aufgelegt oder aufgetragen werden und dann ein thermisches Erweichen des Füllmaterials erfolgt, ohne dass dadurch die Form des Abdichtelements beeinflusst wird, so dass auch mitsamt dem Abdichtelement ein Verpressen des erweichten Füllmaterials in das Gewebe oder Geflecht hinein erfolgen kann.

Alternativ oder ergänzend ist bei einer weiteren Ausführung des erfindungsgemäßen Funktionselements vorgesehen, dass mindestens eine der Dichtoberflächen als Abdichtelement mit mindestens einer Lage aus einem metallischen Flachmaterial versehen ist, welche ebenfalls als höhenelastisches Element ausgebildet ist und dazu dient, den Spalt zwischen der Dichtoberfläche und der Anlageseite einer Baugruppe abzudichten.

Insbesondere ist dabei vorgesehen, dass die mindestens eine Lage aus metallischem Flachmaterial mit Dichtelementen, wie beispielsweise Elastomerauflagen oder Sicken, versehen ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Draufsicht auf ein erstes Ausführungsbeispiel eines erfindungsgemäßen Funktionselements;
- Fig. 2: einen Schnitt längs Linie 2-2 in Fig. 1;
- Fig. 3: einen Schnitt längs Linie 3-3 in Fig. 2;
- Fig. 4: einen Schnitt ähnlich Fig. 3, welches ein Auflegen einer Schicht aus einem Füllmaterial auf ein Gewebe oder Geflecht vor einem Verpressen mit ebenfalls in Fig. 4 dargestellten Presswerkzeugen zeigt;
- Fig. 5: eine Darstellung ähnlich Fig. 4 eines zweiten Ausführungsbeispiels eines erfindungsgemäßen Funktionselements;
- Fig. 6: eine Darstellung ähnlich Fig. 3 des zweiten Ausführungsbeispiels des erfindungsgemäßen Funktionselements;
- Fig. 7: eine Darstellung ähnlich Fig. 4 eines dritten Ausführungsbeispiels des erfindungsgemäßen Funktionselements;
- Fig. 8: eine Darstellung ähnlich Fig. 3 des dritten Ausführungsbeispiels des erfindungsgemäßen Funktionselements;
- Fig. 9: eine Darstellung ähnlich Fig. 4 eines Beispiels eines nicht beanspruchten Funktionselements;
- Fig. 10: eine Darstellung ähnlich Fig. 3 des Beispiels des nicht beanspruchten Funktionselements;
- Fig. 11: eine Darstellung eines fünften Ausführungsbeispiels eines erfindungsgemäßen Funktionselements basierend auf dem ersten Ausführungsbeispiel des erfindungsgemäßen Funktionselements;
- Fig. 12: eine Darstellung einer Steuereinheit mit einer Zwischenplatte umfassend ein erfindungsgemäßes Funktionselement;
- Fig. 13: einen Schnitt durch eine erste Ausführungsform der Zwischenplatte gemäß Fig. 12 mit in dieser integriertem erfindungsgemäßem Funktionselement gemäß dem ersten Ausführungsbeispiel und
- Fig. 14: einen Schnitt durch eine zweite Ausführungsform der Zwischenplatte gemäß Fig. 12, gebildet aus einem Funktionselement gemäß dem ersten Ausführungsbeispiel.

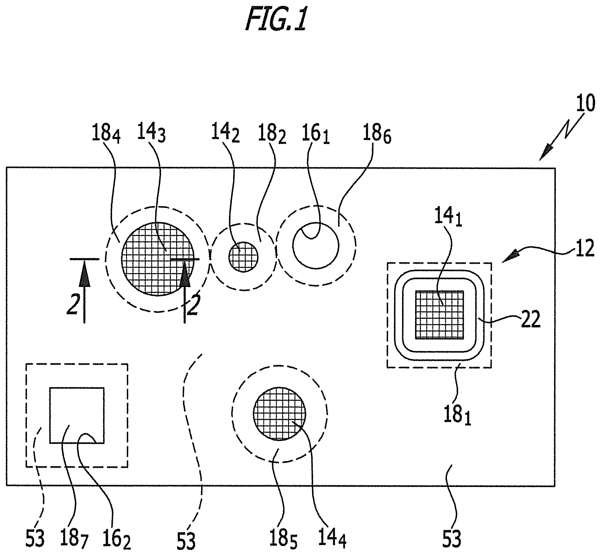

Ein in Fig. 1 dargestelltes erstes Ausführungsbeispiel eines erfindungsgemäßen Funktionselements 10, umfasst eine als Ganzes mit 12 bezeichnete Funktionsmateriallage, welche Siebbereiche 14₁, 14₂, 14₃ und 14₄ aufweist, mit welchen ein Filtern eines durch die Funktionsmateriallage 12 hindurchtretenden Fluids erfolgt.

Beispielsweise kann die Funktionsmateriallage 12 zusätzlich zu den Siebbereichen 14 noch Durchbrüche 16₁ und/oder 16₂ aufweisen, durch welche ein Fluid ungehindert hindurchtreten kann.

Die Siebbereiche 14 und die Durchbrüche 16 sind vorzugsweise umgeben von Abdichtbereichen 18, in welchen die Funktionsmateriallage 12 querschnittsdicht ausgeführt ist.

Dabei können die Abdichtbereiche 18, wie in Fig. 1 beispielsweise gepunktet dargestellt, die jeweiligen Siebbereiche 14 oder Durchbrüche 16 umgebende Bereiche sein oder es kann die gesamte Funktionsmateriallage 12 außerhalb der Siebbereiche 14 und der Durchbrüche 16 als ein zusammenhängender Abdichtbereich 18 ausgebildet sein.

Die Abdichtbereiche 18 können so ausgebildet sein, dass sie direkt an eine abzudichtende Fläche eines Gehäuses oder eine Fluid-Aus- und /oder - Einlässe aufweisende Einheit anlegbar sind.

Beispielsweise kann die Funktionslage 12 aber auch so ausgebildet sein, dass sie in den Abdichtbereichen 18 Abdichtelemente 22 aufweist, die beispielsweise den jeweiligen Siebbereich 14 oder den jeweiligen Durchbruch 16 geschlossen umgeben.

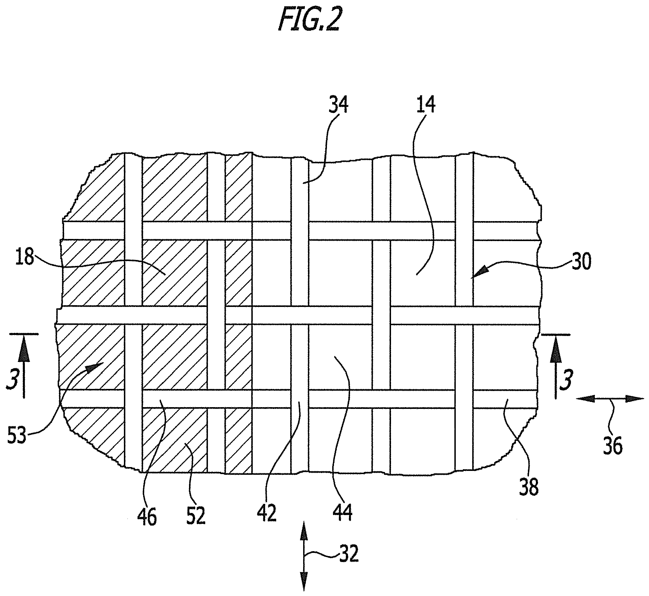

Wie in Fig. 2 dargestellt, umfasst die Funktionsmateriallage 12 ein als Ganzes mit 30 bezeichnetes Gewebe oder Geflecht aus parallel zu einer ersten Richtung 32 verlaufenden und quer zur zweiten Richtung 36 im Abstand voneinander angeordneten Fäden 34 sowie aus parallel zu einer zweiten Richtung 36, die quer zur ersten Richtung 32 verläuft, verlaufende und im Abstand voneinander angeordneten zweiten Fäden 38, wobei sich die Fäden 34 und 38 an Kreuzungsstellen 42 übergreifen und aufeinanderliegen und außerdem jeweils Durchlassöffnungen 44 umschließen, deren Ausdehnung durch den Abstand der ersten Fäden 34 voneinander und den Abstand der zweiten Fäden 38 voneinander festgelegt ist.

Beispielsweise liegt die Dicke der Fäden 34, 38 im Bereich zwischen 30 µm und 300 µm.

Das in einem der Siebbereiche 14 verlaufende Gewebe 30 entfaltet somit mit seinen Durchlassöffnungen 44 in dem jeweiligen Siebbereich 14 die gewünschte Filterwirkung, die dadurch bedingt ist, dass durch die Durchlassöffnungen 44 nur Partikel hindurchtreten können, die eine kleinere Ausdehnung als die jeweilige Durchlassöffnungen 44 aufweisen, während Partikel mit einer größeren Ausdehnung als die Durchlassöffnungen 44 zurückgehalten werden.

Das Gewebe oder Geflecht 30 erstreckt sich bei der erfindungsgemäßen Funktionsmateriallage 12 über die gesamte Ausdehnung derselben bis zu dessen äußeren Randbereichen und bildet einerseits in den Siebbereichen 14 mit seinen Durchlassöffnungen 44 das Filterelement für Filterung des hindurchtretenden Fluids, während das Gewebe oder Geflecht 30 außerhalb der Siebbereiche 14 eine Grundstruktur 46 für den Abdichtbereich 18 bildet.

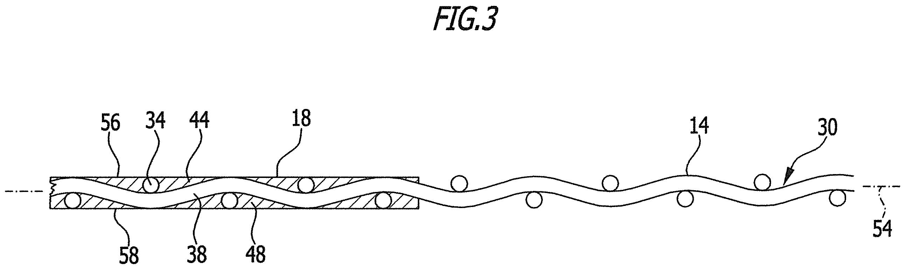

In dem Abdichtbereich 18 sind allerdings die Durchlassöffnungen 44 verschlossen, und zwar beispielsweise durch ein thermoplastisches Füllmaterial 52, welches, wie in Fig. 2 und 3 dargestellt, im Abdichtbereich 18 die Durchlassöffnungen 42 verschließt und außerdem die Fäden 34 und 38 des Gewebes oder Geflechts 30 einbettet.

Dadurch ergibt sich zumindest in dem jeweiligen Abdichtbereich 18 eine formstabile Struktur 53 ähnlich einem Faserverbundwerkstoff.

Diese formstabile Struktur 53 stabilisiert nicht nur die von dieser umgebenen Siebbereiche 14 sondern auch das Gewebe oder Geflecht 30 insgesamt, so dass beispielsweise eine derartige formstabile Struktur 53 in allen Bereichen des Funktionselements 10 außerhalb der Siebbereiche 14 und der Durchbrüche 16 vorgesehen werden kann.

Zumindest kann eine derartige formstabile Struktur 53 nahe den äußeren Randbereichen der Funktionsmateriallage 12 vorgesehen werden.

Mit dieser formstabilen Struktur 53 ist es möglich, dass sich ungefähr parallel zu einer Ausdehnungsfläche 54 des Gewebes oder Geflechts 30 verlaufende Dichtoberflächen 56 und 58 ergeben, die eine Oberflächenrauigkeit aufweisen, die kleiner ist als ein 0,5-faches einer Dicke der Fäden 34, 38, noch besser kleiner als das 0,1-fache einer Dicke der Fäden 34, 38.

Vorzugsweise beträgt die Oberflächenrauigkeit weniger als 10 µm.

Somit sind die Dichtoberflächen 56, 58 quer zu ihrer Flächenausdehnung in einem Abstand von einander angeordnet, der vorzugsweise mindestens der Summe aus der Dicke eines Fadens 34 und der Dicke eines Fadens 38 entspricht, da diese in den Kreuzungsstellen 42 übereinanderliegen und somit den Mindestabstand der Dichtoberflächen 56, 58 festlegen, wenn keine Deformation der Fäden 34, 38 erfolgen soll.

Das die Durchlassöffnungen 44 und die seitlich derselben liegenden und die Raumbereiche 48 zwischen den Fäden 34 und 38 sowie den Dichtoberflächen 56, 58 ausfüllende erweichte Füllmaterial 52 ist dabei beispielsweise ein Thermoplast, welcher sich relativ zu dem Gewebe oder Geflecht 30 so formen lässt, dass dieses Füllmaterial 52 die Durchlassöffnungen 44 durchsetzt und verschließt und außerdem die sich an die Fäden 34, 38 anschließenden Raumbereiche 48 bis zu den Dichtoberflächen 56, 58 auffüllt, so dass die Dichtoberflächen 56, 58 mit der genannten geringen Oberflächenrauigkeit ausgebildet werden können.

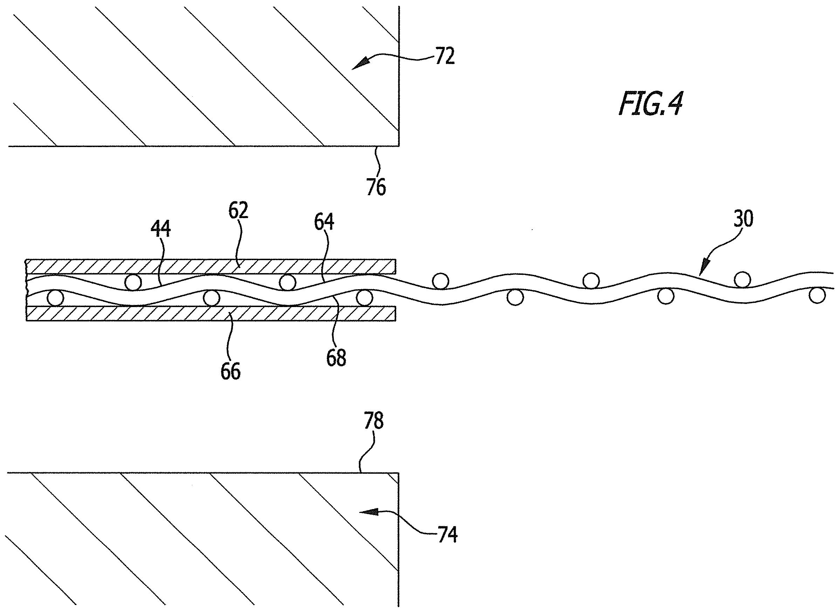

Das Aufbringen eines derartigen Füllmaterials 52 erfolgt, wie in Fig. 4 dargestellt, durch Auflegen von einer Füllmaterialfolie 62 auf eine erste Seite 64 des Gewebes oder Geflechts 30 und das Auflegen einer Füllmaterialfolie 66 auf einer der ersten Seite 64 gegenüberliegende zweiten Seite 68 des Geflechts oder Gewebes 30, wobei die Folien 62, 66 aus Füllmaterial 52 eine Dicke aufweisen, die in der Größenordnung der Dicke der Fäden 34, 38 liegt, vorzugsweise etwas geringer ist als die Dicke der Fäden 34 und 38.

Das Füllmaterial kann in der Füllmaterialfolie 62, 66 bereits im erweichten Zustand dadurch vorliegen, dass es im erweichten Zustand hergestellt und zu der Füllmaterialfolie verarbeitet wurde.

Bei einem Thermoplast als Füllmaterial 52 der Füllmaterialfolien bewirkt ein Erhitzen der Folien 62 und 64 ein Erweichen des die Folien 62 und 66 bildenden Füllmaterials 52 aus dem Thermoplast.

Durch anschließendes Einpressen des von den Füllmaterialfolien 62 und 66 umfassten erweichten Füllmaterials mittels Presswerkzeugen 72 und 74 in die Durchlassöffnungen 44 können die Durchlassöffnungen 44 und die Raumbereiche 48 um die Fäden 34 und 38 soweit aufgefüllt werden, dass eine Ausbildung der Dichtoberflächen 56 und 58 mit der genannten geringen Oberflächenrauigkeit erfolgt.

Dabei lassen sich insbesondere durch entsprechend ausgebildete Pressflächen 76, 78 der Presswerkzeuge 72, 74 die Dichtoberflächen 56 und 58 mit der gewünschten geringen Oberflächenrauigkeit ausbilden.

Auf diese Dichtoberflächen 56 und 58 lassen sich dann beispielsweise die Dichtelemente 22 nachträglich auftragen oder auflegen.

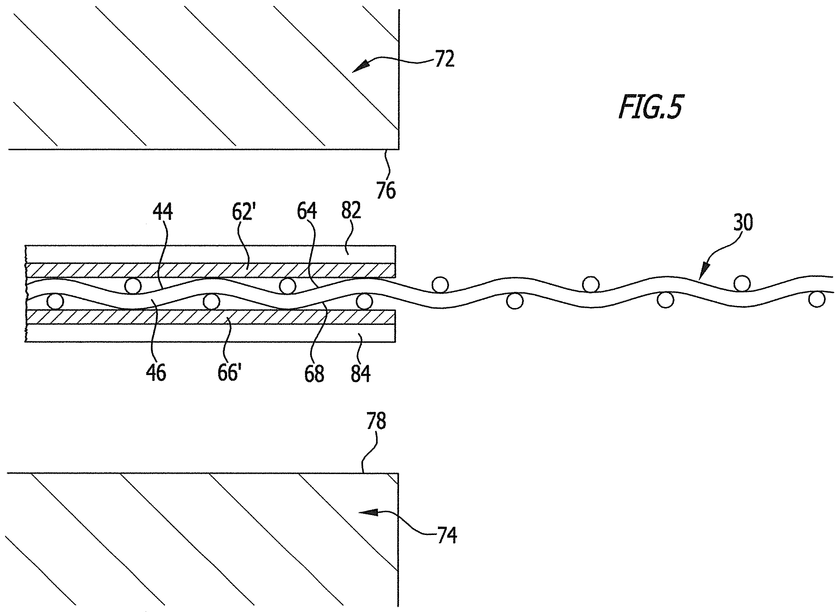

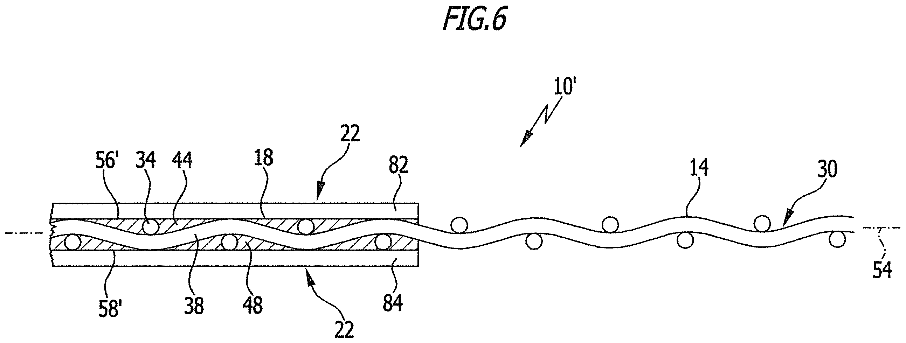

Bei einem zweiten Ausführungsbeispiel eines erfindungsgemäßen Funktionselements 10', dargestellt in den Fig. 5 und 6, sind die Folien 62' und 66' aus dem Füllmaterial 52 bereits auf ihrer jeweils dem Gewebe oder Geflecht 30 abgewandten Seite mit einer Elastomerschicht 82 bzw. 84 versehen, wobei die Elastomerschichten 82, 84 eine größere Temperaturstandfestigkeit als das Füllmaterial 52 der Folien 62' und 66' selbst aufweisen, so dass bei Erhitzen und Verpressen mit den Verpresswerkzeugen 72 und 74 die Elastomerschichten 82 und 84 als solche unverändert erhalten bleiben, während das Füllmaterial 52 der Folien 62' und 66' erweicht und beim Verpressen in die Durchlassöffnungen 44 und die Raumbereiche 48 eingepresst und eingedrückt wird, so dass nach dem Verpressen das Füllmaterial 52 der Folien 62' und 66' wiederum die Dichtoberflächen 56' und 58' bildet, auf denen jedoch bereits aufliegend die Elastomerschichten 82 und 84 vorhanden sind, welche für eine weitere Abdichtung von mit dem Funktionselement abzudichtenden Flächenbereichen zur Verfügung stehen.

Zur Ausbildung der Fäden 34 und 38 wurden im Zusammenhang mit dem ersten und zweiten Ausführungsbeispiel keine näheren Angaben gemacht.

Beispielsweise könnte das Gewebe 30 ein Gewebe auf Metallfäden 34 und 38 sein.

Es ist aber auch denkbar, das Gewebe 30 aus Fäden 34 und 38 aus Kunststoffmaterial, beispielsweise sogar aus Thermoplastmaterial, herzustellen, sofern sichergestellt ist, dass das Material der Fäden 34 und 38 einen höheren Erweichungspunkt aufweist als das als Füllmaterial 52 eingesetzte Material, beispielsweise das Thermoplastmaterial, aus welchem die Folien 62 und 66 hergestellt sind.

Damit ist selbst bei Erweichen des Thermoplastmaterials der Folien 62 und 66 sichergestellte, dass die Struktur der Fäden 34 und 38 erhalten bleibt, so dass die Fäden 34 und 38 auch in diesem Fall zur mechanischen Festigkeit der Funktionsmateriallage wesentlich beitragen.

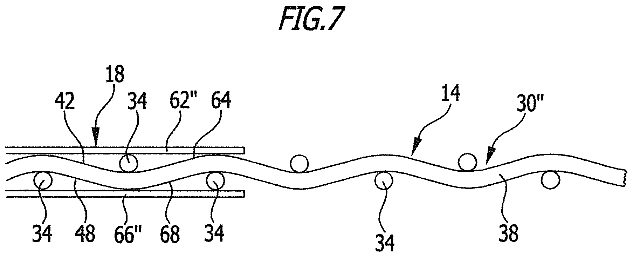

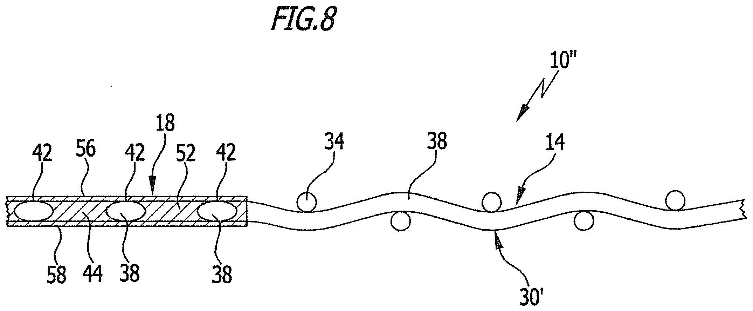

Bei einem dritten Ausführungsbeispiel eines erfindungsgemäßen Funktionselements 10", dargestellt in Fig. 7 und 8 sind die Fäden 34 und 38 aus einem thermoplastischen Material, das sich aber in gleicher Weise wie das thermoplastische Material der Folien 62" und 66" erweichen lässt.

Wird daher auf die herzustellenden Abdichtbereiche 18 des Gewebes oder Geflechts 30" jeweils beiderseits die Folie 62" und 66" aufgelegt und verpresst, so erfolgt einerseits ein Eindrücken des Füllmaterials der Folie 62" und 66" in die Durchlassöffnungen 44, gleichzeitig erfolgt jedoch ein Deformieren der Fäden 34 und 38, insbesondere im Bereich der Kreuzungsstellen 42 unter Abflachung derselben, so dass bereits durch die Abflachung der Fäden 34 und 38 die Querschnittsfläche der Durchlassöffnungen 44 reduziert wird und insgesamt dünnere Folien 62" und 66" verwendet werden können, um die Durchlassöffnungen 44 und die Raumbereiche 48 auszufüllen.

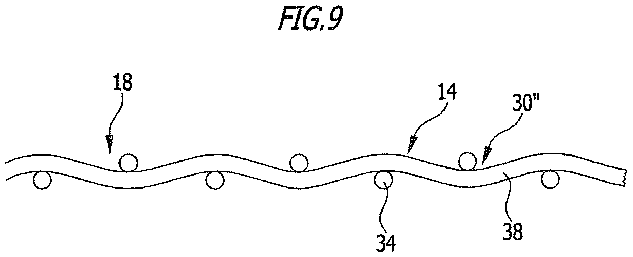

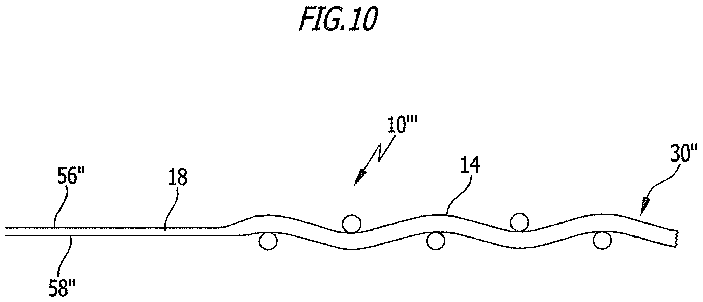

Wie in den Fig. 9 und 10 dargestellt, sind bei einem Beispiel eines nicht beanspruchten Funktionselements 10"' die Fäden 34 und 38 des Geflechts 30" aus einem thermoplastischen Material hergestellt.

Bei diesem Beispiel wird kein zusätzliches Füllmaterial verwendet, sondern das thermoplastische Material der Fäden 34 und 38 wird derart stark verpresst, dass wie in Fig. 10 dargestellt, ein Abdichtbereich 18 entsteht, in welchem die Fäden 34 und 38 derart deformiert sind, dass deren Material eine zusammenhängende und somit querschnittsdichte Fläche ausbildet, die ihrerseits die Dichtoberflächen 54" und 56" aufweist.

Diese Dichtoberflächen 54" und 58" können selbst unmittelbar an abzudichtende Flächen angelegt werden oder mit Abdichtelementen 22 versehen werden.

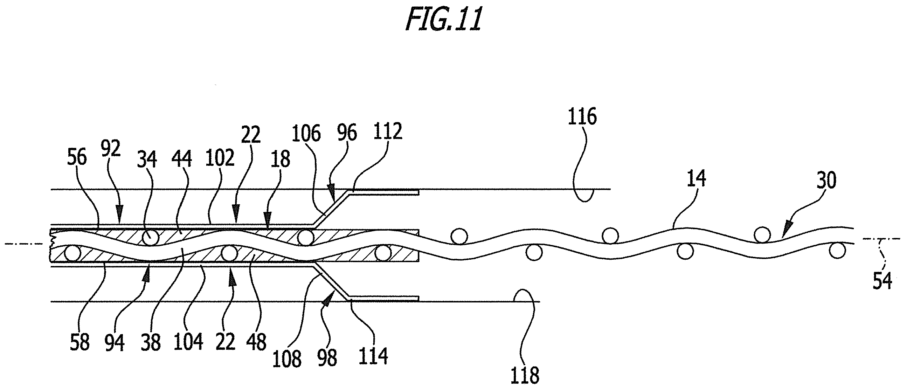

Die Abdichtelemente 22, die auf den Dichtoberflächen 56 und 58 aufliegen, sind dabei nicht zwangsläufig nur als Elastomerschichten 82 und 84 ausgebildet, sondern können, wie bei einem fünften Ausführungsbeispiel eines erfindungsgemäßen Funktionselements in Fig. 11 dargestellt, auch als Sickenbleche 92 und 94 aus Metall ausgebildet sein, die beispielsweise nahe eines Übergangs zwischen dem Abdichtbereich 18 und dem Siebbereich 14 Sicken 96, 98 aufweisen mit denen eine Abdichtung beispielsweise gegenüber Anlageflächen 116, 118 eines Gehäuses oder einer Fluid-Aus- und/oder - Einlässe aufweisenden Einheit möglich ist.

Dabei weisen die Sickenbleche 92 und 94 beispielsweise Auflagebereiche 102 und 104 auf, mit denen diese unmittelbar auf den Dichtoberflächen 56 und 58 aufliegen, wobei sich ausgehend von diesen Auflagebereichen 102 und 104 die Sicken 96 und 98 mit ihren Sickenfüßen 106 und 108 von den Dichtoberflächen 56 und 58 weg erstrecken und jeweils Sickenkämme 112 und 114 aufweisen, die einen größeren Abstand von den Dichtoberflächen 56 und 58 aufweisen als die Auflagebereiche 102 und 104.

Eine derartige Kombination eines erfindungsgemäßen Funktionselements 10 mit Dichtelementen 22, wie sie beispielsweise im zweiten Ausführungsbeispiel oder im fünften Ausführungsbeispiel beschrieben sind, lässt sich insbesondere als Flachdichtung einsetzen, beispielsweise als Flachdichtung bei Zylinderköpfen oder als Flachdichtung in Form einer Zwischenplatte zwischen Gehäuseteilen von fluidbetriebenen Steuereinheiten.

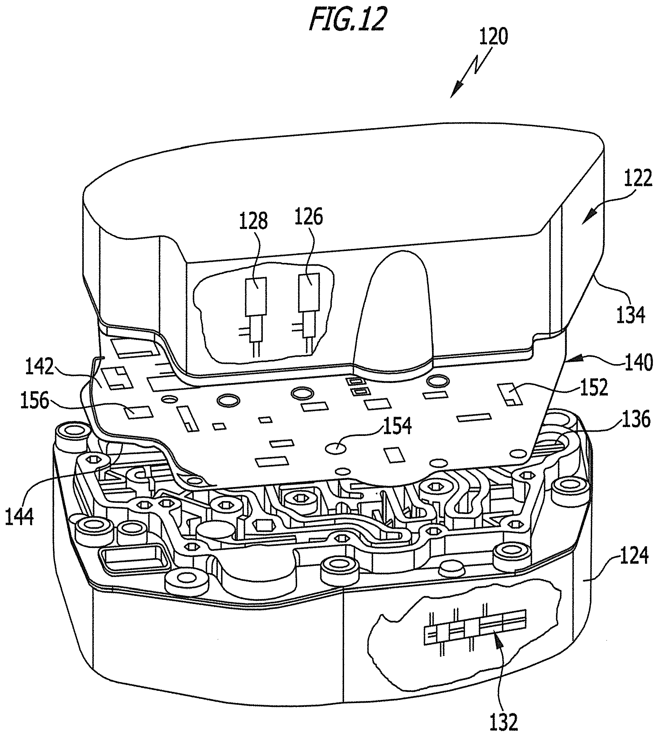

Eine derartige, mit 120 bezeichnete Steuereinheit ist beispielsweise in Fig. 12 dargestellt, wobei diese dazu dient, fluidbetriebene Verbraucher, beispielsweise fluidbetriebene Getriebeeinheiten, insbesondere Getriebeeinheiten für Kraftfahrzeuge, zu steuern.

Eine derartige Steuereinheit 120 umfasst beispielsweise ein erstes Gehäuseteil 122, das insbesondere aus Metall hergestellt ist, und ein zweites Gehäuseteil 124, ebenfalls insbesondere aus Metall hergestellt, von denen beispielsweise das erste Gehäuseteil Ventile 126 und 128 und das zweite Gehäuseteil 124 beispielsweise einen Schieber 132 aufweist, wobei diese jeweils ein Fluss von einem Fluid in dem jeweiligen Gehäuseteil 122 bzw. 124 steuern oder regeln.

Die beiden Gehäuseteile 122, 124 weisen einander zugewandte Kanalseiten 134 und 136 auf, welche so ausgebildet sind, dass das Fluid von dem einen Gehäuseteil 122, 124 in das jeweils andere Gehäuseteil 124, 126 übertreten kann.

Zwischen diesen Kanalseiten 134 und 136 der Gehäuseteile 122, 124 ist eine als Ganzes mit 140 bezeichnete Zwischenplatte eingesetzt, die an der Kanalseite 134 des ersten Gehäuseteils 122 mit einer ersten Seite 142 und an der Kanalseite 136 des zweiten Gehäuseteils 124 mit einer zweiten Seite 144 anliegt und jeweils mit den Kanalseiten 134 und 136 dicht abschließt, wobei in der Zwischenplatte 140 Durchlässe, beispielsweise die Durchlässe 152, 154 und 156, und eventuell noch weitere Durchlässe vorgesehen sind, durch welche ein Übertreten des Fluids von dem einen Gehäuseteil 122, 124 in das andere Gehäuseteil 124, 122 erfolgt.

Dabei ermöglichen einige der Durchlässe, beispielsweise die Durchlässe 152 und 156, ein ungehindertes Übertreten des Fluids von dem einen Gehäuseteil 122, 124 in das andere Gehäuseteil 124, 122, ergänzend dazu dienen einige der Durchlässe, beispielsweise der Durchlass 154, als Funktionselement zur Beeinflussung des vom einen Gehäuseteil 122, 124 in das andere Gehäuseteil 124, 122 übertretenden Fluids, wobei durch einen derartigen Durchlass 154 beispielsweise eine gezielt anpassbare Drosselwirkung zur Steuerung von Abläufen, insbesondere zeitlichen Abläufen bei Schaltvorgängen, erreicht werden kann.

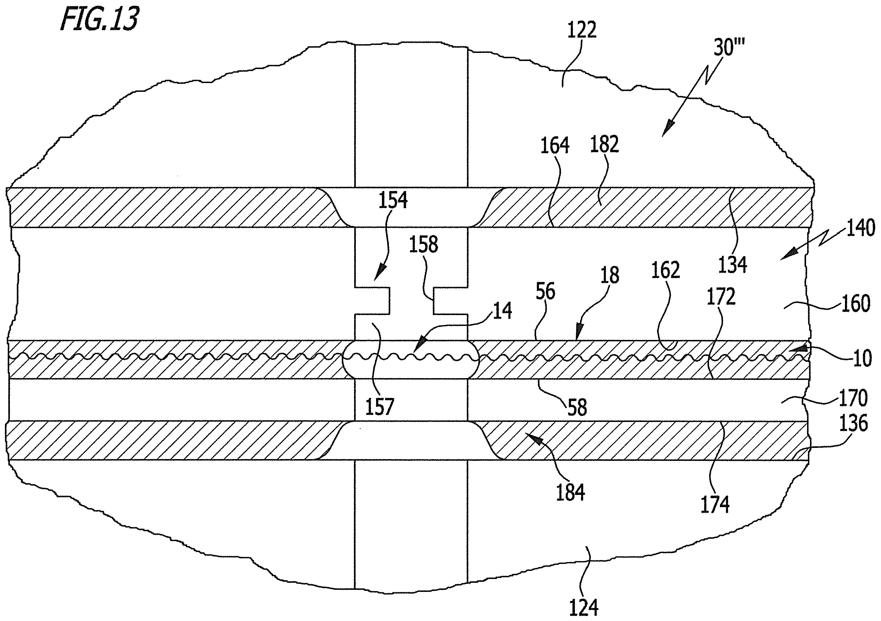

Bei der in Fig. 13 dargestellten ersten Ausführungsform der erfindungsgemäßen Zwischenplatte 140 ist der Durchlass 154 durch die Zwischenplatte 140 durch eine Drosselöffnung 158 verengt, die in einer Zentraleinheit 160 der Zwischenplatte 140 angeordnet ist.

Die Zentraleinheit 160 wird beispielsweise gebildet durch eine Metallplatte.

Auf einer Seite der Zentraleinheit 160 ist beispielsweise ein erfindungsgemäßes Funktionselement 10 gemäß dem ersten Ausführungsbeispiel angeordnet, wobei dieses mit seiner Dichtoberfläche 56 unmittelbar an einer eine Anlagefläche darstellenden Oberfläche 162 der Zentraleinheit 160 anliegt.

Die gegenüberliegende Dichtoberfläche 58 liegt an einer eine Anlagefläche darstellenden Oberfläche 172 einer weiteren Metalllage 170 an, so dass das erfindungsgemäße Funktionselement 10 zwischen zwei höhenunelastischen Metalllagen 160 und 170 liegt und aufgrund der geringen Oberflächenunebenheiten der Dichtoberflächen 56 und 58 mit diesen dicht abschließen kann.

Ferner ist das Funktionselement 10 so angeordnet, dass der Siebbereich 14 überlappend mit einer in die Drosselöffnung 158 übergehenden Vertiefung 157 angeordnet ist, so dass Fluid durch den Siebbereich 14 zu der Drosselöffnung 158 strömen kann.

Beispielsweise erfolgt eine Abdichtung der Zwischenplatte 140 relativ zu den Kanalseiten 134 und 136 der Gehäuseteile 122, 124 dadurch, dass die Zentraleinheit 160 auf ihrer der Kanalseite 134 zugewandten Oberfläche 164 ein Abdichtelement 182 trägt und die Zwischenlage 170 auf ihrer der Kanalseite 136 zugewandten Oberfläche 174 ein Dichtelement 184 trägt, wobei die Dichtelemente 182 und 184 entweder als Elastomerschichten oder als metallische Dichtelemente, beispielsweise mit Sicken, ausgebildet sein können.

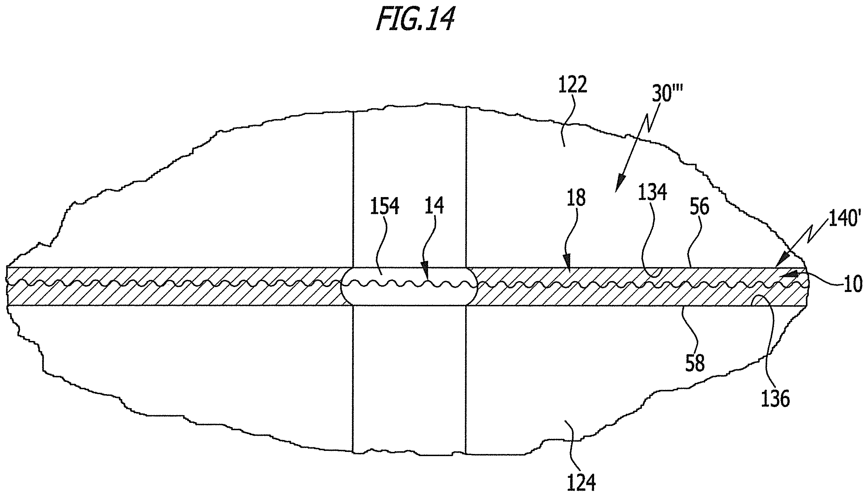

Bei einer in Fig. 14 dargestellten zweiten Ausführungsform der Zwischenplatte 140' ist diese nur durch das Funktionselement 10 gemäß dem ersten Ausführungsbeispiel gebildet, das mit seinen Dichtoberflächen 56, 58 unmittelbar an den Kanalseiten 134 und 136 anliegt.

Durch die geringe Oberflächenrauigkeit von beispielsweise weniger als 10 µm ist eine unmittelbare Abdichtung zu den höhenunelastisch ausgebildeten Kanalseiten 134 und 136 möglich, wobei vorzugsweise die Gehäuseteile 122, 124 so miteinander verbunden sind, dass die Kanalseiten 134 und 136 mit einer Flächenpressung von mindestens 0,1 MPa (Mega Pascal) an den Dichtoberflächen 56, 58 anliegen.

## Patentansprüche

1. Verfahren zum Herstellen eines Funktionselements (10) insbesondere für Flachdichtungen, bei welchen eine Funktionsmateriallage (12) mit einem Siebbereich (14) versehen wird, in welchem zwischen Fäden (34, 38) eines Gewebes oder Geflechts (30) Durchlassöffnungen (44) zum Durchströmen für ein Fluid freiliegend sind, wobei die Funktionsmateriallage (12) mit einem querschnittsdicht ausgebildeten Abdichtbereich (18) versehen wird, in welchem die Durchlassöffnungen (44) des Gewebes oder Geflechts (30) durch Erweichen und Verpressen eines die Durchlassöffnungen (44) füllenden Füllmaterials (52) verschlossen werden,
**dadurch gekennzeichnet, dass** das die Durchlassöffnungen (44) verschließende Füllmaterial (52) als Schicht oder Folie (62, 66) auf das Gewebe oder Geflecht (30) aufgetragen oder aufgelegt und die Schicht oder Folie aus ergänzendem erweichten Füllmaterial in das Gewebe oder Geflecht (30) eingepresst wird, und dass durch das Verpressen des erweichten Füllmaterials (52) die Durchlassöffnungen (44) des Gewebes oder Geflechts (30) verschlossen und auch sich an die Fäden (34, 38) anschließende Raumbereiche (48) des Gewebes oder Geflechts (30) ausgefüllt werden.

2. Verfahren nach Anspruch 1, **dadurch gekennzeichnet, dass** durch das Verpressen des erweichten Füllmaterials (62, 66) beidseitig des Gewebes oder Geflechts (30) eine zur Abdichtung gegen eine Anlagefläche geeignete Dichtoberfläche (56, 58) gebildet wird und dass insbesondere die jeweilige Dichtoberfläche (56, 58) zur Abdichtung gegen eine Anlagefläche einer höhenunelastischen Baugruppe ausgebildet wird.

3. Verfahren nach Anspruch 2, **dadurch gekennzeichnet, dass** auf mindestens einer der Dichtoberflächen (56, 58) eine Abdichtelement (22) vorgesehen wird.

4. Verfahren nach Anspruch 3, **dadurch gekennzeichnet, dass** mindestens einer der Abdichtbereiche (18) mit einem Abdichtelement (22) aus Elastomermaterial (82, 84) versehen wird.

5. Verfahren nach Anspruch 4, **dadurch gekennzeichnet, dass** das Abdichtelement aus Elastomermaterial (82, 84) mit einer das Füllmaterial (52) aufweisenden Folie (62, 66) auf das Gewebe oder Geflecht (30) aufgelegt wird.

6. Verfahren nach einem der Ansprüche 2 bis 5, **dadurch gekennzeichnet, dass** auf der mindestens einen Dichtoberfläche (56, 58) als Abdichtelement (22) mindestens eine Lage (92, 94) aus einem metallischen Flachmaterial vorgesehen wird.

7. Verfahren nach Anspruch 6, **dadurch gekennzeichnet, dass** die mindestens eine Lage aus metallischem Flachmaterial (92, 94) mit mindestens einem Dichtelement (106, 108) versehen wird.

8. Funktionselement (10) insbesondere für Flachdichtungen umfassend eine Funktionsmateriallage (12) mit einem Siebbereich (14), in welchem zwischen Fäden (34, 38) eines Gewebes oder Geflechts (30) Durchlassöffnungen (44) zum Durchströmen für ein Fluid freiliegend angeordnet sind, wobei in einem querschnittsdicht ausgebildeten Abdichtbereich (18), die Durchlassöffnungen (44) des Gewebes oder Geflechts (30) durch ein Füllmaterial (52) ausgefüllt und somit verschlossen sind, **dadurch gekennzeichnet, dass** das die Durchlassöffnungen (44) verschließende Füllmaterial (52) durch eine in das Gewebe oder Geflecht (30) in erweichten Zustand eingepresste Schicht oder Folie (62, 66) aus ergänzendem Füllmaterial gebildet ist, dass das verpresste Füllmaterial (52) die Durchlassöffnungen (44) des Gewebes oder Geflechts (30) verschließt und sich an die Fäden anschließende Raumbereiche (48) des Gewebes oder Geflechts (30) ausfüllt.

9. Funktionselement nach Anspruch 8, **dadurch gekennzeichnet, dass** das Füllmaterial (62, 66) die Durchlassöffnungen (44) durchsetzt.

10. Funktionselement nach Anspruch 8 oder 9, **dadurch gekennzeichnet, dass** das eingepresste Füllmaterial (52) beidseitig des Gewebes oder Geflechts (30) eine zur Abdichtung gegen eine Anlagefläche (162, 172) geeignete Dichtoberfläche (56, 58) bildet und dass insbesondere die jeweilige Dichtoberfläche (56, 58) zur Abdichtung gegen eine Anlagefläche (162, 172) einer höhenunelastischen Baugruppe ausgebildet ist.

11. Funktionselement nach einem der Ansprüche 8 bis 10, **dadurch gekennzeichnet, dass** auf mindestens einer der Dichtoberflächen (56, 58) ein Abdichtelement (22) angeordnet ist.

12. Funktionselement nach Anspruch 11, **dadurch gekennzeichnet, dass** auf mindestens einer der Dichtoberflächen (56, 58) ein Abdichtelement (22) aus Elastomermaterial angeordnet ist.

13. Funktionselement nach Anspruch 12, **dadurch gekennzeichnet, dass** das Elastomermaterial (82, 84) eine Erweichungstemperatur aufweist, die so weit über einer Erweichungstemperatur des Füllmaterials (52) liegt, dass das Abdichtelement (22) nach einem thermischen Erweichen des Füllmaterials (52) formunverändert ist.

14. Funktionselement nach einem der Ansprüche 8 bis 13, **dadurch gekennzeichnet, dass** mindestens eine der Dichtoberflächen (56, 58) als Abdichtelement (22) mit mindestens einer Lage (92, 94) aus einem metallischen Flachmaterial versehen ist.

15. Funktionselement nach Anspruch 14, **dadurch gekennzeichnet, dass** die mindestens eine Lage aus metallischem Flachmaterial (92, 94) mit Dichtelementen (106, 108) versehen ist.

## Claims

1. Method for producing a functional element (10), in particular, for flat seals, wherein a functional material layer (12) is provided with a sieve region (14) in which through openings (44) for the passage of a fluid lie exposed between threads (34, 38) of a woven or plaited fabric (30), wherein the functional material layer (12) is provided with a sealing region (18) which is configured cross-sectionally impermeable, in which the through openings (44) of the woven or plaited fabric (30) are closed by the softening and compressing of a filling material (52) filling the through openings (44),
**characterised in that** the filling material (52) closing the through openings (44) is applied or laid as a layer or film (62, 66) onto the woven or plaited fabric (30) and the layer or film of supplemental softened filling material is pressed into the woven or plaited fabric (30), and **in that**, by means of the compressing of the softened filling material (52), the through openings (44) of the woven or plaited fabric (30) are closed and also spatial regions (48) of the woven or plaited fabric (30) adjoining the threads (34, 38) are filled.

2. Method according to claim 1, **characterised in that**, by means of the compressing of the softened filling material (62, 66) on both sides of the woven or plaited fabric (30), there is formed a sealing surface (56, 58) suitable for sealing against a contact surface, and **in that** in particular the respective sealing surface (56, 58) is configured for sealing against a contact surface of an assembly of inelastic height.

3. Method according to claim 2, **characterised in that** a sealing element (22) is provided on at least one of the sealing surfaces (56, 58).

4. Method according to claim 3, **characterised in that** at least one of the sealing regions (18) is provided with a sealing element (22) of elastomer material (82, 84).

5. Method according to claim 4, **characterised in that** the sealing element of elastomer material (82, 84) is placed, together with a film (62, 66) comprising the filling material (52), onto the woven or plaited fabric (30).

6. Method according to one of claims 2 to 5, **characterised in that** at least one layer (92, 94) made of a metallic flat material is provided on the at least one sealing surface (56, 58) as a sealing element (22).

7. Method according to claim 6, **characterised in that** the at least one layer of metallic flat material (92, 94) is provided with at least one seal element (106, 108).

8. Functional element (10), in particular, for flat seals, comprising a functional material layer (12) with a sieve region (14) in which through openings (44) for the passage of a fluid are arranged lying exposed between threads (34, 38) of a woven or plaited fabric (30), wherein, in a sealing region (18) formed to be cross-sectionally impermeable, the through openings (44) of the woven or plaited fabric (30) are filled by a filling material (52) and are thereby closed, **characterised in that** the filling material (52) closing the through openings (44) is formed by a layer or film (62, 66) of supplemental filling material pressed into the woven or plaited fabric (30) in the softened state, **in that** the compressed filling material (52) closes the through openings (44) of the woven or plaited fabric (30) and fills spatial regions (48) of the woven or plaited fabric (30) adjoining the threads.

9. Functional element according to claim 8, **characterised in that** the filling material (62, 66) permeates the through openings (44).

10. Functional element according to claim 8 or 9, **characterised in that**, on both sides of the woven or plaited fabric (30), the pressed in filling material (52) forms a sealing surface (56, 58) suitable for sealing against a contact surface (162, 172), and **in that** in particular the respective sealing surface (56, 58) is configured for sealing against a contact surface (162, 172) of an assembly of inelastic height.

11. Functional element according to one of the claims 8 to 10, **characterised in that** a sealing element (22) is arranged on at least one of the sealing surfaces (56, 58).

12. Functional element according to claim 11, **characterised in that** a sealing element (22) of elastomer material is arranged on at least one of the sealing surfaces (56, 58).

13. Functional element according to claim 12, **characterised in that** the elastomer material (82, 84) has a softening temperature which is so far above a softening temperature of the filling material (52) that the sealing element (22) is of unchanged form following a thermal softening of the filling material (52).

14. Functional element according to one of the claims 8 to 13, **characterised in that** at least one of the sealing surfaces (56, 58) is provided as a sealing element (22) with at least one layer (92, 94) made of a metallic flat material.

15. Functional element according to claim 14, **characterised in that** the at least one layer made of a metallic flat material (92, 94) is provided with seal elements (106, 108).

## Revendications

1. Procédé de fabrication d'un élément fonctionnel (10) en particulier pour des joints plats, selon lequel une couche de matériau fonctionnel (12) est pourvue d'une zone de criblage (14), dans laquelle des ouvertures de passage (44) destinées à l'écoulement d'un fluide sont mises à découvert entre des fils (34, 38) d'un tissu ou treillis (30), dans lequel la couche de matériau fonctionnel (12) est pourvue d'une zone d'étanchéité (18) réalisée de manière étanche en section transversale, dans laquelle les ouvertures de passage (44) du tissu ou treillis (30) sont fermées par ramollissement et compression d'un matériau de remplissage (52) remplissant les ouvertures de passage (44),
**caractérisé en ce que** le matériau de remplissage (52) fermant les ouvertures de passage (44) est appliqué ou posé en tant que couche ou feuille (62, 66) sur le tissu ou treillis (30) et la couche ou feuille de matériau de remplissage ramolli complémentaire est enfoncée dans le tissu ou treillis (30), et que les ouvertures de passage (44) du tissu ou treillis (30) sont fermées et les zones spatiales (48) du tissu ou treillis (30) se raccordant aux fils (34, 38) sont également remplies par la compression du matériau de remplissage (52) ramolli.

2. Procédé selon la revendication 1, **caractérisé en ce qu'**une surface d'étanchéité (56, 58) adaptée à assurer une étanchéité par rapport à une surface d'appui est formée par la compression du matériau de remplissage (62, 66) ramolli de part et d'autre du tissu ou treillis (30) et qu'en particulier la surface d'étanchéité (56, 58) respective est conçue pour assurer une étanchéité par rapport à une surface d'appui d'un ensemble non élastique en hauteur.

3. Procédé selon la revendication 2, **caractérisé en ce qu'**un élément d'étanchéité (22) est prévu sur au moins une des surfaces d'étanchéité (56, 58).

4. Procédé selon la revendication 3, **caractérisé en ce qu'**au moins une des zones d'étanchéité (18) est pourvue d'un élément d'étanchéité (22) fait de matériau élastomère (82, 84).

5. Procédé selon la revendication 4, **caractérisé en ce que** l'élément d'étanchéité fait de matériau élastomère (82, 84) est posé avec une feuille (62, 66) présentant le matériau de remplissage (52) sur le tissu ou treillis (30).

6. Procédé selon l'une quelconque des revendications 2 à 5, **caractérisé en ce qu'**au moins une couche (92, 94) faite d'un matériau plat métallique est prévue sur la au moins une surface d'étanchéité (56, 58) en tant qu'élément d'étanchéité (22).

7. Procédé selon la revendication 6, **caractérisé en ce que** la au moins une couche faite de matériau plat métallique (92, 94) est pourvue d'au moins un élément d'étanchéité (106, 108).

8. Elément fonctionnel (10) en particulier pour des joints plats comprenant une couche de matériau fonctionnel (12) avec une zone de criblage (14), dans laquelle des ouvertures de passage (44) destinées à l'écoulement d'un fluide sont mises à découvert entre des fils (34, 38) d'un tissu ou treillis (30), dans lequel dans une zone d'étanchéité (18) réalisée de manière étanche en section transversale, les ouvertures de passage (44) du tissu ou treillis (30) sont remplies par un matériau de remplissage (52) et donc fermées, **caractérisé en ce que** le matériau de remplissage (52) fermant les ouvertures de passage (44) est formé par une couche ou feuille (62, 66) faite de matériau de remplissage complémentaire enfoncée à l'état ramolli dans le tissu ou treillis (30), que le matériau de remplissage (52) compressé ferme les ouvertures de passage (44) du tissu ou treillis (30) et remplit les zones spatiales (48) du tissu ou treillis (30) se raccordant aux fils.

9. Elément fonctionnel selon la revendication 8, **caractérisé en ce que** le matériau de remplissage (62, 66) traverse les ouvertures de passage (44).

10. Elément fonctionnel selon la revendication 8 ou 9, **caractérisé en ce que** le matériau de remplissage (52) enfoncé forme des deux côtés du tissu ou treillis (30) une surface d'étanchéité (56, 58) adaptée à assurer une étanchéité par rapport à une surface d'appui (162, 172) et qu'en particulier la surface d'étanchéité (56, 58) respective est conçue pour assurer une étanchéité par rapport à une surface d'appui (162, 172) d'un ensemble non élastique en hauteur.

11. Elément fonctionnel selon l'une quelconque des revendications 8 à 10, **caractérisé en ce qu'**un élément d'étanchéité (22) est disposé sur au moins une des surfaces d'étanchéité (56, 58).

12. Elément fonctionnel selon la revendication 11, **caractérisé en ce qu'**un élément d'étanchéité (22) fait de matériau élastomère est disposé sur au moins une des surfaces d'étanchéité (56, 58).

13. Elément fonctionnel selon la revendication 12, **caractérisé en ce que** le matériau élastomère (82, 84) présente une température de ramollissement qui se situe au-dessus d'une température de ramollissement du matériau de remplissage (52) à un point tel que la forme de l'élément d'étanchéité (22) après un ramollissement thermique du matériau de remplissage (52) est inchangée.

14. Elément fonctionnel selon l'une quelconque des revendications 8 à 13, **caractérisé en ce qu'**au moins une des surfaces d'étanchéité (56, 58) est pourvue en tant qu'élément d'étanchéité (22) d'au moins une couche (92, 94) faite d'un matériau plat métallique.

15. Elément fonctionnel selon la revendication 14, **caractérisé en ce que** la au moins une couche faite d'un matériau plat (92, 94) métallique est pourvue d'éléments d'étanchéité (106, 108).
